(19) Europäisches Patentamt
European Patent Office
Office européen des brevets

(11) **EP 2 473 875 B1**

(12) **FASCICULE DE BREVET EUROPEEN**

(45) Date de publication et mention de la délivrance du brevet:
**13.02.2019 Bulletin 2019/07**

(21) Numéro de dépôt: **10747204.5**

(22) Date de dépôt: **25.08.2010**

(51) Int Cl.:
*G02B 7/02* (2006.01)     *G11B 7/22* (2006.01)
*G02B 27/30* (2006.01)

(86) Numéro de dépôt international:
**PCT/EP2010/062406**

(87) Numéro de publication internationale:
**WO 2011/026770 (10.03.2011 Gazette 2011/10)**

(54) **DISPOSITIF D' AJUSTEMENT POUR OBTENIR LA COLLIMATION D'UN POINT OPTIQUE**

JUSTAGEVORRICHTUNG FÜR EINEN COLLIMATOR

ADJUSTING ASSEMBLY FOR A COLLIMATOR

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **02.09.2009 FR 0955989**

(43) Date de publication de la demande:
**11.07.2012 Bulletin 2012/28**

(73) Titulaires:
• **Observatoire de Paris**
**75014 Paris (FR)**
• **Rosenbusch, Peter**
**92500 Rueil-Malmaison (FR)**

(72) Inventeur: **ROSENBUSCH, Peter**
**F-92500 Rueil-malmaison (FR)**

(74) Mandataire: **Chaffraix, Jean**
**Brandon IP**
**64, rue Tiquetonne**
**75002 Paris (FR)**

(56) Documents cités:
**US-A- 4 498 737     US-A1- 2007 171 553**
**US-B1- 6 304 393**

• ANDALKAR A ET AL: "Improved external cavity design for cesium D1 (894 nm) diode laser" REVIEW OF SCIENTIFIC INSTRUMENTS, AIP, MELVILLE, NY, US, vol. 71, no. 11, 1 novembre 2000 (2000-11-01), pages 4029-4031, XP012037802 ISSN: 0034-6748 cité dans la demande

EP 2 473 875 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention concerne un dispositif de collimation pour un point optique, auquel est associé un faisceau de rayonnement, dispositif formé :

- d'une platine-support solidaire dudit point ;
- d'une platine optique mobile par rapport à ladite platine-support pour un agencement optique de collimation typiquement une lentille, dont sa position est définie par son centre optique, la plaque mobile étant mue par trois moyens de coulissement rattachés à la plaque fixe et reposant sur un plan d'appui de ladite plaque mobile, la position de la plaque mobile étant réglable par rapport à la plaque fixe en distance le long d'un axe optique passant par ledit point et étant parallèle audit coulissement et en inclinaison par rapport audit axe optique.

Ce qu'on entend par point optique est, notamment, une source lumineuse telle qu'une diode à effet laser ou une surface de captation d'un faisceau lumineux telle que l'entrée d'une fibre optique ou une cellule photo électrique voire d'un composant optique non linéaire.

Ce genre de dispositif trouve d'importantes applications dans le domaine de l'optique et notamment la formation d'un faisceau bien dirigé, à partir d'une diode laser. Des exemples d'applications sont la projection d'images, la lecture de codes-barres ou le couplage du laser à d'autres composants optiques tels qu'une cavité optique ou une fibre optique.

En général, dans les applications de l'optique à propagation libre, la focalisation d'un faisceau par une lentille ou l'opération inverse, la collimation d'un faisceau divergent, sont des fonctions qu'il faut couramment assurer. Pour la focalisation d'un faisceau, l'opérateur veut pouvoir contrôler la position exacte du point focal et ceci dans les trois dimensions de l'espace. Cette nécessité de contrôle vient du fait que l'opérateur souhaite coupler le faisceau à un élément optique. Ledit élément optique définit un axe optique ; pour optimiser le couplage du faisceau, le contrôle de la position du point focal dans les directions longitudinale et transverses à l'axe optique est nécessaire. Ce contrôle peut se faire en contrôlant la position de la lentille suivant les directions longitudinale et transverses à l'axe optique.

Le même besoin est exprimé pour l'opération inverse, la collimation d'un faisceau divergent, par simple inversion de la direction de propagation de la lumière. Ici la position de la lentille détermine la divergence/convergence du faisceau sortant ainsi que son orientation par rapport à l'axe optique. Cette opération est appliquée notamment pour la formation d'un faisceau quasi-collimaté issue d'une diode laser. Par simple convention, Il sera décrit dans ce mémoire cette application par la suite, sans qu'elle constitue une restriction en généralité pour les champs d'application de l'invention. Pour le cas d'un faisceau issu d'une diode laser, un opérateur peut souhaiter optimiser la divergence/convergence et l'orientation du faisceau utile, notamment pour le coupler à un deuxième élément optique.

La présente invention concerne aussi un dispositif de transformation d'un rayonnement tel qu'un modulateur de phase, de fréquence, d'amplitude voire un doubleur de fréquence optique.

Lorsqu'on est dans le cas d'un dispositif de collimation opérant avec une diode laser, on est confronté à la taille de ces dernières. En effet, la structure émettrice des diodes laser est d'une taille de l'ordre de la longueur d'onde, la diffraction crée une grande divergence de la lumière partant du semi-conducteur vers l'espace libre. L'angle de divergence peut atteindre 30°. Un faisceau d'une telle divergence a peu d'utilité car son intensité diminue rapidement après quelques millimètres de propagation. Pour collecter toute la lumière émise, il est donc nécessaire de prévoir un dispositif de collimation constituée à partir d'une lentille de grande ouverture numérique, placée à proximité de la face de la diode laser. Ce genre de lentille présente pratiquement une distance focale de quelques millimètres, longueur choisie pour limiter la taille physique de la lentille tout en gardant une grande ouverture numérique.

A cause de la courte distance focale de la lentille, la direction, la collimation, voire même les propriétés du faisceau sortant dépendent fortement de la position de la lentille. Un déplacement de la lentille le long de son axe optique change la divergence du faisceau, alors qu'un déplacement transversal change sa direction. Par exemple, pour une longueur focale de 3 mm, le faisceau collimaté de sortie est défléchi de 2° si la lentille est déplacée transversalement de 0.1 mm. Une telle sensibilité nécessite un très bon contrôle du positionnement de la lentille, ce qui implique la nécessité d'avoir un déplacement facile de la lentille pendant la procédure d'alignement et, une fois l'alignement atteint, il est important que la structure de fixation présente une grande stabilité mécanique et thermique.

Les exigences imposées à de tels dispositifs de collimation sont les suivantes. Le positionnement de la lentille pendant la procédure d'alignement doit permettre son déplacement le long de l'axe optique pour régler la divergence du faisceau émergent mais également son déplacement transversal. Même une conception mécanique parfaite nécessite cette liberté de mouvement car même la position de la structure émettrice à l'intérieur de la diode n'est connue par rapport à sa monture qu'à 1 ou 2 dixièmes de mm près, typiquement. Il découle de toutes ces exigences qu'une structure mécanique qui relie la diode laser et la lentille doit être particulièrement soignée.

Un dispositif de collimation du genre mentionné dans le préambule est décrit dans l'article « Improved external cavity design for cesium D1 (894 nm) diode laser » de A.Andalkar, S. K. Lamoreaux et R.B. Warrington, paru dans la revue REVIEW OF SCIENTIFIC INSTRUMENT dans le volume 71, le numéro 1, daté du mois de novembre 2006. Des platines d'ajustement sont connues des publications US 2007/0171553 et US 4 498 737.

En tant qu'exemple dans l'article susdit, le faisceau émergent est finalement couplé à un deuxième élément optique, un réseau optique.

Ce dispositif connu comporte trois moyens de coulissement constitués par trois vis de réglage portant sur une plaque mobile. Ici les trois moyens de coulissement sont parallèles et agissent tous le long l'axe optique. Ils sont situés pratiquement à 120° autour de l'agencement optique de collimation aux sommets d'un triangle équilatéral. La plaque mobile incorpore la lentille telle que son centre optique coïncide avec le plan d'appui des trois vis. En agissant sur les trois vis de la même manière, cela conduit à un déplacement de la lentille le long de l'axe optique. En agissant sur une ou deux des vis, cela conduit également à un petit déplacement transverse à l'axe optique, mais surtout à une rotation de la lentille. Une forte rotation de la lentille conduit à l'introduction des aberrations de coma, effet qui dégrade la qualité optique du faisceau sortant. Pour cela, dans la pratique, le déplacement transverse à l'axe optique possible reste très petit.

D'autres applications visées par l'invention sont exigeantes sur la précision et la stabilité du réglage de focalisation, c'est le cas surtout pour l'injection d'un faisceau lumineux dans une fibre optique. En effet, le coeur d'une fibre optique ne fait que quelques microns de diamètre et la localisation doit se maintenir même sous l'effet de vibrations et autres perturbations.

La présente invention vise à fournir un dispositif de collimation qui ne présente pas les inconvénients précités.

Conformément, un aspect de l'invention d'un dispositif de collimation du genre cité dans le préambule est remarquable en ce que ce que ledit centre optique est éloigné dudit plan d'appui et en ce que lesdits moyens de déplacement sont manoeuvrés en vue de conjuguer le faisceau de rayonnement désiré avec ledit point.

De plus, les moyens de coulissement sont répartis selon les sommets d'un triangle rectangle et en outre, il est prévu une ouverture au niveau de la plaque mobile pour le passage du faisceau émergent.

Le dispositif contrôlant le positionnement de la plaque mobile peut-être une monture optique « optical mount », par exemple du type décrit, notamment, dans le document de brevet US 6,304,393, dotée de 3 moyens de coulissement.

Ainsi, par les mesures préconisées par l'invention, le positionnement des moyens de coulissement résout dans de grandes proportions les difficultés de réglage de la position de l'agencement optique pour des applications diverses.

Un avantage important de l'invention est que le réglage de la position de cet agencement permet d'obtenir une déviation du faisceau collimaté que l'on peut facilement maîtriser, sans introduire un excès d'aberration dé coma. Ainsi, par ces mesures proposées par l'invention, le dispositif permet de régler la collimation, la focalisation, la divergence ainsi que la déflection du faisceau.

On rappelle les spécificités de l'invention.

Une première spécificité de cette invention est que ladite platine-support est solidaire dudit point optique et que lesdits axes des moyens de coulissement sont parallèles à l'axe optique passant par ledit point optique.

Une deuxième spécificité de cette invention est qu'il est possible de disposer d'un tube dit tube d'extension qui est solidaire avec la platine mobile qui permet d'éloigner encore l'agencement optique de collimation..

Une troisième spécificité de cette invention est que la position de ladite lentille définie par son centre optique se trouve à une distance L non-nulle dudit plan d'appui, distance définie par la longueur dudit tube d'extension.

Une autre spécificité de cette invention est que le plan de la lentille passant par ledit centre optique est quasi parallèle audit plan d'appui.

De cette manière, la position dudit centre optique de la lentille est réglable par rapport audit axe optique dans les trois dimensions de l'espace (le long de l'axe optique et le long les deux axes transverses audit axe optique), tout en gardant l'angle entre ledit axe optique et ledit plan de la lentille proche de 90 degrés.

L'invention trouve d'importantes applications dans le domaine de visualisation de motifs lumineux dans une salle sans utiliser de moyens de balayages opto-mécaniques coûteux tels que miroirs tournants etc.

Le moyen tenant la source étant fixe, le moyen tenant la lentille est mobile et sa position et son orientation se règlent par rapport au moyen fixe. Les degrés de liberté sont la distance le long l'axe optique entre les deux moyens, ainsi que les deux angles d'inclinaison perpendiculaire à l'axe optique. La rotation autour de l'axe optique est fixe. Le centre optique de la lentille ne coïncide pas avec le centre de rotation du moyen le tenant, telle qu'une rotation du moyen mobile induit un déplacement du centre optique transverse à l'axe optique.

La description suivante accompagnée des dessins ci-annexés, le tout donné à titre d'exemple non limitatif, fera bien comprendre comment l'invention peut être réalisée. Dans les dessins :

- la figure 1 montre une première variante de réalisation d'un dispositif de collimation conforme à l'invention,
- la figure 2A montre une coupe du dispositif de collimation montré à la figure 1,
- la figure 2B montre, en coupe une autre disposition de la lentille dans le dispositif de l'invention
- la figure 3 montre la structure de la plaque mobile faisant partie du dispositif de l'invention,
- la figure 4 montre une deuxième variante de réalisation d'un dispositif de collimation conforme à l'invention,
- la figure 5 montre une troisième variante de réalisation d'un dispositif de collimation conforme à l'invention,
- la figure 6 montre une quatrième variante de réalisation d'un dispositif de collimation conforme à l'invention,

- la figure 7 est un premier schéma explicatif du fonctionnement du dispositif de l'invention,
- la figure 8 est un deuxième schéma explicatif du fonctionnement du dispositif de l'invention,
- la figure 9 montre une autre variante de réalisation du dispositif de l'invention,
- la figure 10 montre le dispositif de collimation pour lequel le point optique est une surface de captation,
- la figure 11 montre un dispositif de transformation de rayonnement formé de deux dispositifs de collimation.
- Les figures 12 et 13 sont destinées à l'explication de l'invention.

Sur les figures représentées, les éléments communs portent les mêmes références.

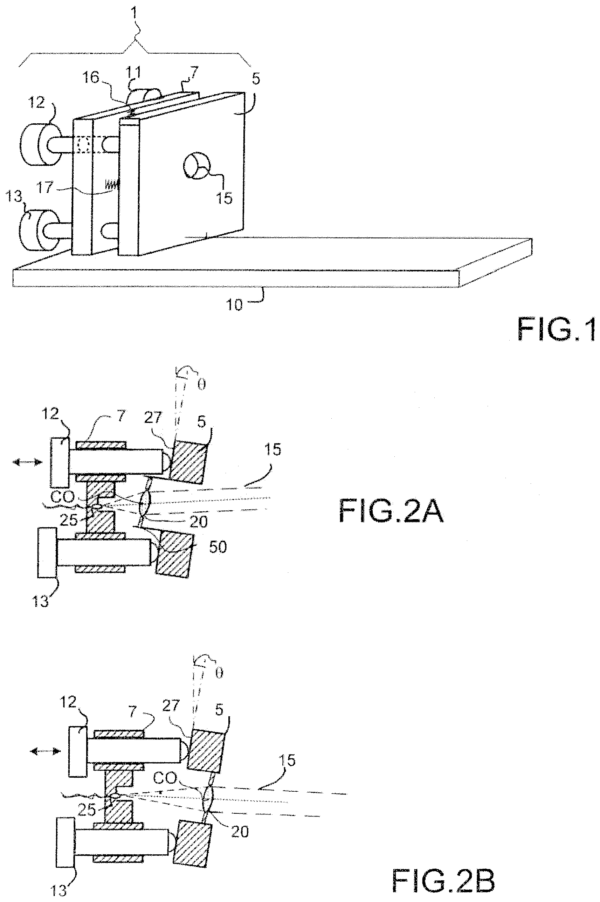

A la figure 1, le dispositif de collimation porte la référence 1. Il est formé d'une monture optique dont une plaque mobile 5 et une plaque support fixe 7 reposent sur un support 10. Sur cette plaque fixe 7 sont disposés trois moyens de coulissement formés par des vis de réglage 11, 12 et 13. La plaque mobile 5 est munie d'une ouverture 15 qui permet le passage du faisceau. Au moins deux ressorts 16 et 17 sont prévus pour maintenir la plaque mobile 5 en dépendance avec la plaque fixe 7 et fournissent une force qui amène cette plaque mobile vers la plaque fixe. Cette force est contrecarrée par les moyens de coulissement 11, 12 et 13. Il est prévu une lentille de collimation 20 constituant un agencement de collimation, non visible sur cette figure

Aux figure 2A et 2B, le faisceau divergent issu d'une diode laser est transformé en un faisceau quasi-collimaté, c'est à dire, peu divergent ou peu convergent, par un agencement de collimation 20. Cet agencement 20 est placé au niveau de l'ouverture 15 pour collimater le rayonnement d'une diode laser 25. Cet agencement de collimation est formé essentiellement par une lentille dont te centre optique porte la référence CO. La diode laser 25 est solidaire de la plaque fixe 7 et donc du support 10. A la figure 2A la lentille est insérée dans un tube 50 et à La figure 2B, elle est insérée dans la plaque mobile 5.

Selon les mesures proposées par l'invention, en faisant varier les enfoncements des moyens de coulissement 11, 12 et 13 de façons identiques, on peut rapprocher ou éloigner la plaque mobile 5 vis à vis de la diode laser 25. On peut ainsi régler la distance entre la lentille et la diode. Si on modifie différemment les enfoncements des moyens de coulissement 11, 12 et 13, on peut apporter aussi une déviation du faisceau en changeant l'angle d'inclinaison $\theta$ de la plaque mobile 5, ceci provoque un déplacement transversal de la lentille, comme cela est montré à la figure 2. Il est à noter que la structure de base du dispositif de collimation de l'invention peut être construite à partir de composants du commerce, tels que ceux fabriqués par les sociétés NEWPORT, NEWFOCUS, THORLABS ou autres.

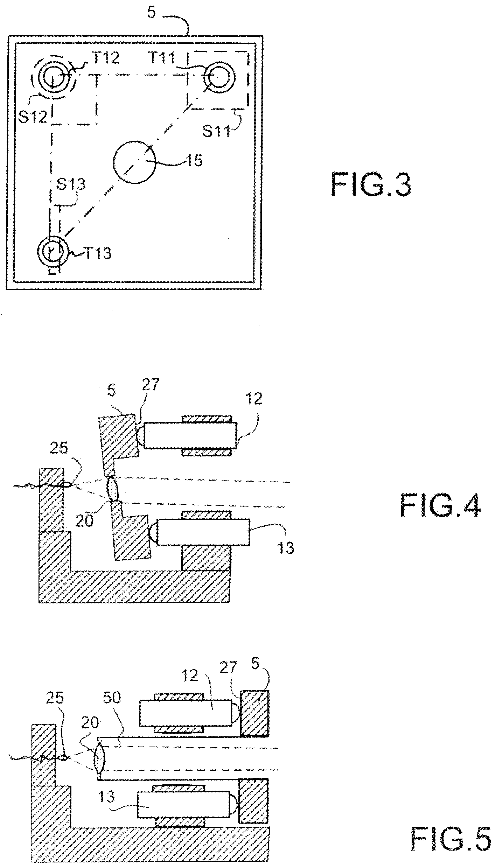

Sur certaines montures optiques commerciales, les points d'appui T11, T12 et T13 des moyens de coulissement 11, 12 et 13 forment un triangle rectangle, comme cela est explicité à la figure 3 au moyen de traits mixtes. Cette figure 3 montre la face de la plaque mobile, dite face d'appui 27, sur laquelle viennent s'appuyer les moyens de coulissement. Les points d'appui T1, T2 et T3 se déplacent sur cette face en fonction des enfoncements des vis 11, 12 et 13. Le déplacement de l'appui de la vis 11 est limité par une surface S11, l'appui de la vis 12, reste fixé dans un logement S12 et le déplacement de la vis 13 est limité par une rainure S13.

La figure 4 montre une variante de réalisation de l'invention. Selon ce mode, la face d'appui 27 de la plaque 5 ne fait plus face à la diode laser 25, mais est placée de l'autre côté de cette plaque mobile. Donc, les moyens de coulissement sont disposés à une certaine distance de la diode laser. Cette variante présente l'avantage que la diode laser est ainsi mieux dégagée de l'environnement ce qui permet une meilleure ventilation et de ce fait, on peut alors utiliser une diode de haute puissance. En outre, les vis des moyens de coulissement 11, 12 et 13 sont rendues plus facilement accessibles.

La figure 5 montre une deuxième variante de réalisation de l'invention. Selon cette variante, l'agencement de collimation comporte un agencement de rallonge constitué par un tube 50 qui permet un éloignement substantiel de la plaque mobile 5 vis à vis de la diode laser 25. Les moyens de coulissement 11, 12 et 13 sont en contact avec la surface d'appui 27 qui est en vis à vis de la diode 25. Seuls sont représentés sur la figure les moyens de coulissement 12 et 13. Cette variante permet d'amplifier le déplacement transverse.

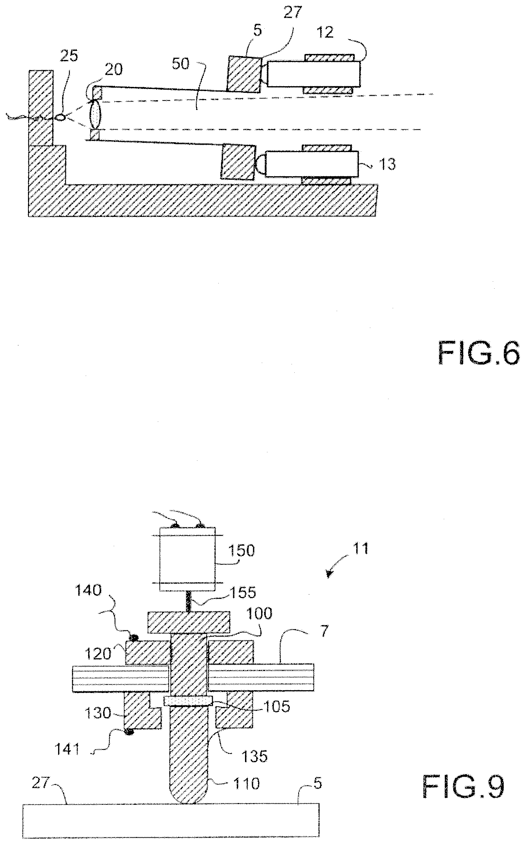

La figure 6 montre une troisième variante de réalisation de l'invention. Cette variante comporte aussi le tube 50, mais là, les moyens de coulissement 12 et 13 sont situés à l'extérieur. La face d'appui 27 est à l'opposé de la diode 25. Une plaque mobile 5 d'une grande épaisseur peut constituer aussi un agencement de rallonge.

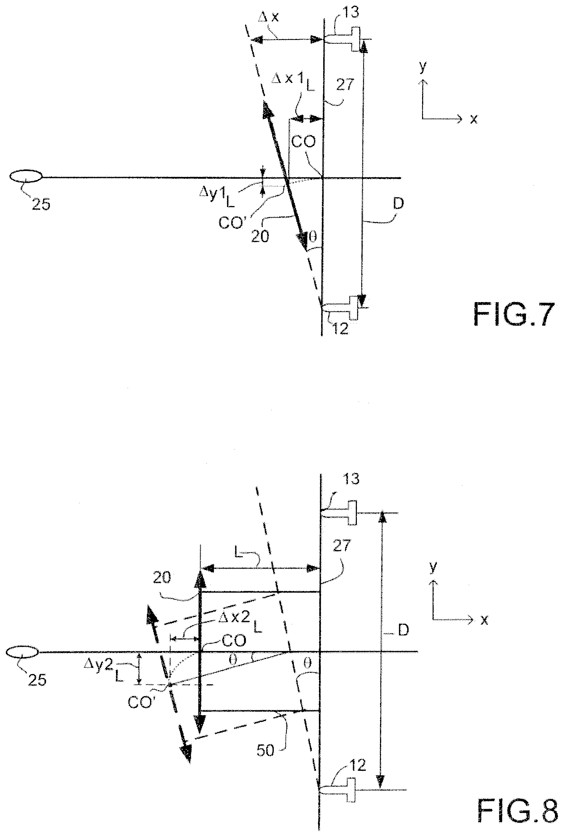

On peut chiffrer les déplacements apportés par les moyens de coulissement. La figure 7 explicite les différents paramètres mis en jeu dans le cadre où le plan de la lentille de collimation 20 et son centre optique CO sont dans le plan d'appui 27, comme c'est le cas pour le dispositif decrit dans « Improved external cavity design for cesium D1 (894 nm) diode laser » de A.Andalkar, S. K. Lamoreaux et R.B. Warrington, paru dans la revue REVIEW OF SCIENTIFIC INSTRUMENT dans le volume 71, le numéro 1, daté du mois de novembre 2006. On admet que l'axe optique de la lentille passe dans le plan médian des deux vis 12 et 13 quand les deux vis sont enfoncées de la même distance. D est la distance entre les vis.

Si en manoeuvrant la vis 13, on l'enfonce d'une distance $\Delta$x, on incline la plaque mobile 5 d'un angle $\theta$=arctan $\Delta$x/D. Ayant admis que l'axe optique de la lentille passe dans le plan médian des deux vis 12 et 13, le déplacement $\Delta x1_L$ du centre optique de la lentille qui, après le déplacement, est référencé par CO' est :

$$\Delta x1_L = \frac{\Delta x}{2} \qquad\qquad (1)$$

Il en découle aussi un déplacement transverse $\Delta y1_L$ du centre optique de la lentille et pour un angle $\theta$. Ce qui donne :

$$\Delta y1_L = \frac{D}{2}(1 - \cos\theta)$$

ce qui peut être décrit par le déplacement $\Delta x$ en faisant une approximation du deuxième ordre par les considérations suivantes :

$$\Delta y1_L \cong \frac{D}{2}\frac{\theta^2}{2} \cong \frac{(\Delta x)^2}{4D} \qquad\qquad (2)$$

Il en résulte donc que l'angle $\theta$, qui doit être petit par le fait qu'il introduit les aberrations de coma, ne permet qu'un déplacement transverse très restreint

La présente invention reprend ce concept compact et mécaniquement solide mais procure les moyens qui apporte l'avantage de réduire fortement les aberrations de coma. L'invention est remarquable par le fait que la lentille est déportée de la plaque mobile à l'aide d'un tube d'extension (voir fig. 2) : ainsi le centre optique ne coïncide pas avec le plan d'appui (voir fig. 8).

La situation caractéristique de l'invention lorsqu'on utilise le tube 50 ou une plaque mobile épaisse est telle qu'il y a une longueur L entre le plan d'appui 27 et le plan de la lentille. On se reporte alors à la figure 8. Lorsqu'on déplace la vis 13 de la même quantité $\Delta x$ on obtient un déplacement $\Delta x2_L$ et $\Delta y2_L$ respectivement du centre optique référencé alors par CO'.

$\Delta x2_L$ s'évalue de la façon suivante :

$$\Delta x2_L = \Delta x/2 + L\sin\theta - L \qquad\qquad (3)$$

$\Delta y2_L$ se détermine en considérant que :

$$\Delta y2_L = L\sin\theta + \frac{D}{2}(1 - \cos\theta)$$

On constate donc que le déplacement transverse $\Delta y2_L$ est d'autant plus grand que la distance L est grande. En choisissant L, l'opérateur peut ainsi obtenir des déplacements transverses considérables tout en gardant l'angle de rotation $\theta$ petit, minimisant ainsi les aberrations de coma.
En faisant un développement limité au deuxième ordre :

$$\Delta x2_L \cong \Delta x/2$$

$$\Delta y2_L \cong L\frac{\Delta x}{D} + \frac{(\Delta x)^2}{4D} \qquad\qquad (4)$$

Dans le membre de droite de la formule (4), on voit deux termes : le second est identique au déplacement $\Delta y1_L$ précédemment calculé, tandis que le premier qualifie le gain obtenu sur le déplacement transverse grâce à l'invention consistant à rajouter le tube 50 ou une plaque mobile épaisse. Le choix de la distance L détermine le gain, et également l'angle de rotation $\theta$ nécessaire pour obtenir un déplacement transversale $\Delta y2_L$ voulu :

$$\sin\theta = \frac{\Delta y2_L}{L} \qquad\qquad (5)$$

Plus L est grand, plus $\theta$ est petit, ce qui permet de réduire les aberrations de coma (voir fig.5). Seules limites à L sont imposées par l'encombrement et la stabilité mécanique.

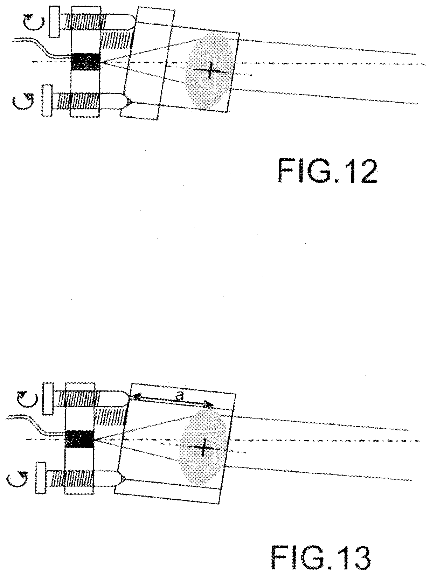

D'autres modes de réalisation de l'invention peuvent être envisagés. Dans le cas de la figure 5 et aussi de la figure 2A, la lentille est entre la diode laser et le plan d'appui. Dans le cas de la figure 12, de la figure 13 et de la figure 2B, le plan d'appui est entre la diode laser et la lentille. Les deux cas donnent pour un même déplacement transverse $\Delta y2_L$ du centre optique, des angles de rotation $\theta$ de sens opposés. Ainsi en choisissant entre les deux variantes et en choisissant L, l'utilisateur peut obtenir un angle $\theta$ donné pour un déplacement transverse $\Delta y2_L$ donné. Ainsi l'utilisateur peut corriger des aberrations de coma éventuellement déjà présentes dans le faisceau incident sur la lentille.

D'autres modes de réalisation de l'invention peuvent être envisagés. Ainsi, on peut supprimer le tube d'extension et utiliser une monture opto-mecanique ayant une plaque mobile très épaisse, telle que la lentille soit tenue hors du plan d'appui (voir fig 13 ou fig 2B ou fig 4)

Ainsi, il peut être prévu de faine varier à distance, par exemple en faisant appel à des moteurs agissant sur les moyens de coulissement, la plaque mobile et ainsi la lentille. Ceci amène l'avantage de pouvoir régler la lentille à distance (applications sous environnement extrême, par exemple l'espace). Il est aussi possible de faire varier sa position rapidement (application dans les projections par laser) ou d'ajuster sa positon très finement (application dans la microscopie ou les lecteurs de média de stockage d'information).

Pour cela, on peut utiliser des montures de miroir où les vis sont tournées par des moteurs, voir notamment le site :

http://www.thorlabs.de/NewGroupPage9.cfm?ObiectGroup_ID=793.

Une telle motorisation ouvre une grande plage de possibles positions, limitée seulement par la longueur des vis. Par contre une variation de la position reste assez lente (de l'ordre de 1s).

De même, une ou plusieurs vis peuvent être remplacées par une cale piézo-électrique. Dans ce cas la plage de déplacement est inférieure au millimètre, par contre une variation rapide de l'ordre de 1ms devient possible. La variation rapide peut trouver des applications pour un balayage laser dans les salles de spectacle ou dans les lecteurs de code barre.

Une combinaison entre une vis et une cale piézoélectrique permet un alignement grossier manuel et un ajustement fin actif rapide.

Un exemple de réalisation est montré à la figure 9. Dans cet exemple la plaque fixe 7 est faite en un matériau électriquement isolant. Le moyen de coulissement 11 est, seul, montré sur la figure 9. Le même montage peut être utilisé avec les autres moyens de coulissement 12, et 13 non montrés sur cette figure. Le moyen de coulissement 11 est donc formé d'une première partie métallique 100, d'une cale piézoélectrique 105 et d'une deuxième partie métallique 110. Aux parties métalliques 100 et 110 sont associées respectivement deux pièces de contact 120 et 130 collées sur la plaque fixe 7. Il est prévu sur la partie 120 un pas de vis pour le réglage manuel de l'enfoncement du moyen de coulissement 11 et une ouverture dans la pièce 130. Une lame de contact 135 frottant sur la partie 110 assure le contact électrique avec la partie métallique 110. Au moyen de conducteurs électriques 140 et 141, il est donc possible d'appliquer une tension de commande à la cale piézoélectrique 105 pour faite varier rapidement l'enfoncement du moyen 11. Les conducteurs électriques peuvent être constitués par des pistes de circuits imprimés plaqués sur la plaque 7.

On peut aussi utiliser un moteur électrique 150 dont l'extrémité de son axe de sortie 155 est rendu solidaire par soudage, par exemple, de la partie 100, pour dégrossir le réglage de la plaque mobile 5. Ainsi, on réalise une commande toute électrique de la collimation.

Il est à noter que la course des coulissements est limitée en vue d'obtenir une aberration acceptable pour l'application envisagée.

Si on utilise le dispositif de l'invention pour effectuer des balayages de faisceau, il faudra limiter l'amplitude de ce balayage pour que l'erreur de coma soit acceptable pour l'application envisagée.

Un tel dispositif peut trouver des applications importantes. On cite, ci-dessous, quelques exemples donnés d'une manière non limitative.

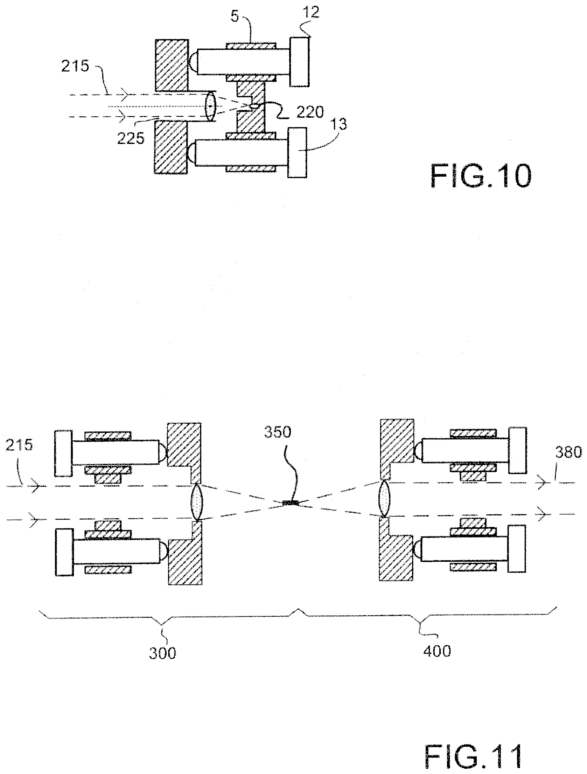

En se référant à la figure 10, on montre une disposition du dispositif de l'invention pour une focalisation d'un faisceau entrant 215 sur un point optique 220. Selon un premier exemple ce point optique est un point d'injection d'une fibre optique. Cet exemple exige une grande précision et une grande stabilité mécanique. Le coeur d'une fibre optique présente un diamètre de quelques micromètres de diamètre. Le faisceau doit être bien focalisé à cette taille la et la superposition de la tache lumineuse avec le coeur doit être parfaite et stable dans le temps (compte tenu du fait que l'environnement peut apporter des vibrations mécaniques et des variations thermiques). On notera, sur cette figure que les moyens de coulissements sont solidaires de la plaque mobile ce qui dans certains montages optiques peut apporter des facilités.

Un deuxième exemple est celui du photo détecteur (capable de détecter des variations d'intensité à haute fréquence, comme par exemple dans la communication optique a très haut débit (plusieurs Gbit par seconde)). Un tel photo détecteur très rapide a une surface active de 250 microns de diamètre. Ici la focalisation et la superposition doivent également être optimisées, mais, en comparant les tailles, les contraintes sont moindres que pour la fibre.

Un troisième exemple est l'injection du faisceau dans une (deuxième) diode laser amplificatrice. Ici les mêmes contraintes s'appliquent comme pour l'émission par une diode laser - c'est le problème symétrique.

Dans ces exemples, le faisceau pénètre le dispositif de l'invention par une ouverture 225 ménagée dans la platine support fixe 7. Le point optique 220 est placé sur la platine mobile 5 qui, donc, peut être déplacée selon les manières déjà indiquées ci-dessus par le biais des moyens de coulissement (11, 12 ou 13).

En se référant à la figure 11, on peut citer d'autres exemples. Un quatrième exemple est l'injection dans un milieu optique actif comme un modulateur d'amplitude ou de polarisation ou de phase ou de fréquence. Souvent un tel modulateur a des dimensions millimétriques ou micrométriques. Dans cet exemple et dans ceux qui vont suivre, on utilise deux dispositifs de l'invention. Un premier dispositif 300, que l'on qualifie de dispositif récepteur, pour recevoir un faisceau incident 215 et générer un faisceau émergent focalisé sur un organe optique 350, qui dans ce quatrième exemple est donc un modulateur. Il en découle un faisceau émergent qui est pris en charge par un dispositif de l'invention qualifié de dispositif émetteur 400 pour fournir un faisceau transformé 380. L'organe optique 350 est bien entendu solidaire de la platine 10 non représentée sur cette figure.

Un cinquième exemple est l'injection sur un organe optique 350 constitué par un milieu optique passif comme un cristal à indice de réfraction non-linéaire. Ce type de cristal est utilisé par exemple pour le doublage en fréquence de la lumière, c'est-à-dire un faisceau incident a la longueur d'onde « λ » et le faisceau sortant aura la longueur d'onde « λ/2. » Pour que le processus non-linéaire soit efficace, souvent une forte focalisation est demandée et une bonne adaptation de la direction du faisceau incident par rapport au cristal. Un cristal fait typiquement quelques mm$^3$ de taille.

Pour les trois dernières applications, le faisceau sortant 380 peut également être formé par le dispositif de collimation de l'invention.

## Revendications

1. Dispositif de collimation (1) pour un point optique (25), du genre notamment source lumineuse ou détecteur de rayonnement, auquel est associé un faisceau de rayonnement, dispositif formé

   - d'une plaque-support fixe (7) solidaire dudit point ;
   - d'une plaque optique mobile par rapport à ladite plaque support pour un agencement optique de collimation (20) formé par au moins une lentille présentant un centre optique (CO) pour associer un point de convergence audit faisceau, la plaque mobile étant mue par trois moyens de coulissement (11, 12 et 13) rattachés à la plaque fixe (7) et reposant sur un plan d'appui (27) de ladite plaque mobile, la position de la plaque mobile étant réglable par rapport à la plaque fixe en distance le long d'un axe optique (X) passant par ledit point et étant parallèle audit coulissement et en inclinaison par rapport audit axe optique (X), **caractérisé en ce que** ce que ledit centre optique est éloigné dudit plan d'appui (27) de manière à ce que l'on puisse obtenir des déplacements transverses considérables tout en gardant l'angle de rotation de la plaque mobile petit, minimisant ainsi les aberrations de coma, et **en ce que** lesdits moyens de déplacement sont manoeuvrés en vue de faire coïncider le point de convergence dudit faisceau avec ledit point optique.

2. Dispositif de collimation selon la revendication 1, **caractérisé en ce que** les moyens de coulissement sont répartis selon les sommets d'un triangle rectangle et **en ce qu'**il est prévu une ouverture (15) au niveau de la plaque mobile (5) pour le passage du faisceau.

3. Dispositif de collimation selon la revendication 1 ou 2, **caractérisé en ce qu'**il est prévu un agencement de rallonge (50) pour maintenir l'agencement de collimation à une distance L dudit plan d'appui (27).

4. Dispositif de collimation selon la revendication 3, **caractérisé en ce que** l'agencement de rallonge est constitué par un tube.

5. Dispositif de collimation selon l'une des revendications 2 à 4, **caractérisé en ce que** la face d'appui (27) fait face audit point optique (25).

6. Dispositif de collimation selon l'une des revendications 2 à 4, **caractérisé en ce que** la face d'appui est située de l'autre côté de la plaque mobile faisant face au dit point optique.

7. Dispositif de collimation selon l'une des revendications 1 à 6 pour lequel le point optique est une source de rayonnement, **caractérisé en ce qu'**il est prévu des moyens de commande pour agir sur les moyens de coulissement en vue de dévier le faisceau issu de ladite source de rayonnement.

8. Dispositif de collimation selon l'une des revendications 1 à 7, **caractérisé en ce que** la course des coulissements est limitée en vue d'obtenir une aberration acceptable pour l'application envisagée.

9. Dispositif de collimation selon l'une des revendications 1 à 8, **caractérisé en ce que** les moyens de coulissement comportent des cales du type piézo-électrique (105).

10. Dispositif de collimation selon l'une des revendications 1 à 8, **caractérisé en ce que** les moyens de coulissement comportent un moteur électrique en vue de faire varier par commande électrique l'enfoncement des moyens de coulissement.

11. Dispositif de collimation selon les revendications 9 et 10, **caractérisé en ce que** la commande effectuée par le moteur est une commande de dégrossissage du réglage tandis que les commandes sur les cales piézo-électriques sont des commandes rapides.

12. Dispositif de collimation selon la revendication 11, **caractérisé en ce que** les commandes rapides effectuées sur les cales piézo-électriques (105) sont utilisées pour un balayage de faisceau laser.

13. Dispositif de collimation selon l'une des revendications 1 à 10, présentant un axe défini par une perpendiculaire à ladite plaque (7) et passant par ledit point (25) **caractérisé en ce que** lesdits moyens de coulissement sont placés d'une manière telle qu'un déplacement identique de chacun d'eux déplace le centre optique (CO) selon une direction parallèle audit axe précité et qu'un déplacement de l'un ou de deux moyens de coulissement déplace(nt) ledit centre optique longitudinalement et transversalement par rapport à cet axe.

14. Dispositif de collimation selon la revendication 1, **caractérisé en ce que** lesdits moyens de coulissement sont placés d'une manière telle qu'il y a une non-coïncidence du centre optique (CO) avec le centre de rotation de la plaque mobile donnée par le déplacement de l'un desdits moyens de coulissement.

15. Dispositif de collimation selon la revendication 1, **caractérisé en ce que** lesdits moyens de coulissement sont placés d'une manière telle qu'une action des trois moyens de coulissement par la même quantité conduit à une focalisation ou défocalisation dudit faisceau.

16. Dispositif de collimation selon la revendication 1, **caractérisé en ce que** lesdits moyens de coulissement sont placés d'une manière telle qu'une l'action d'une ou de deux des moyens de coulissement conduit à une focalisation ou défocalisation et une déflection transverse dudit faisceau.

17. Dispositif de collimation selon l'une des revendications 1 à 16 **caractérisé en ce que** ledit point est un point d'une source de rayonnement lumineux.

18. Dispositif de collimation selon l'une des revendications 1 à 16 **caractérisé en ce que** ledit point est un point de captation pour un rayonnement lumineux.

19. Dispositif de transformation d'un faisceau optique comportant un premier dispositif de collimation selon l'une des revendications 1 à 16 en dépendance avec la revendication 17 et un deuxième dispositif de collimation selon l'une des revendications 1 à 16 en dépendance avec la revendication 18.

20. Dispositif de transformation selon la revendication précédente **caractérisé en ce que** le point optique est un composant optique actif du type modulateur

21. Dispositif de transformation selon la revendication précédente **caractérisé en ce que** le point optique est un composant optique passif du type doubleur de fréquence

**Patentansprüche**

1. Kollimationsvorrichtung (1) für einen optischen Punkt (25), insbesondere eine Lichtquelle oder ein Strahlungsdetektor, dem ein Strahlenbündel zugeordnet ist, wobei die Vorrichtung gebildet wird aus

- einer feststehenden Trägerplatte (7), die mit besagten Punkt fest verbunden ist;

- einer optischen, in Bezug auf besagte Trägerplatte beweglichen Platte für eine optische Kollimationsanordnung (20), die gebildet wird aus mindestens einer Linse, die den optischen Mittelpunkt (CO) aufweist, um dem besagten Strahlenbündel einen Konvergenzpunkt zuzuordnen, wobei die bewegliche Platte durch drei Gleitvorrichtungen (11, 12 und 13) bewegt wird, die mit der feststehenden Platte (7) verbunden sind, und auf einer Auflagefläche (27) der besagten beweglichen Platte aufliegen, wobei die Position der Entfernung der beweglichen Platte von der feststehenden Platte entlang einer optischen Achse (X) über besagten Punkt verstellbar ist und parallel zu besagter Gleitbewegung ist und in Bezug auf besagte optische Achse (X) geneigt ist, **dadurch gekennzeichnet, dass** besagter optischer Mittelpunkt von besagter Auflagefläche (27) so entfernt ist, dass man erhebliche Bewegungen in Querrichtung erzielen kann, ohne den Drehwinkel der kleinen beweglichen Platte zu verändern, wodurch komatische Aberrationen auf ein Minimum reduziert werden, und dadurch, dass besagte Bewegungsmittel so betätigt werden, dass der Konvergenzpunkt des besagten Strahls mit dem besagten optischen Punkt zusammenfällt.

2. Kollimationsvorrichtung nach Anspruch 1, **dadurch gekennzeichnet, dass** die Gleitvorrichtungen entlang den Eckpunkten eines rechtwinkligen Dreiecks verteilt sind, und dadurch, dass eine Öffnung (15) in Höhe der beweglichen Platte (5) für den Durchgang des Strahls vorgesehen ist.

3. Kollimationsvorrichtung nach Anspruch 1 oder 2, **dadurch gekennzeichnet, dass** eine Verlängerungsanordnung (50) vorgesehen ist, um die Polymerisationsanordnung in der Entfernung L zur besagten Auflagefläche (27) zu halten.

4. Kollimationsvorrichtung nach Anspruch 3, **dadurch gekennzeichnet, dass** die Verlängerungsanordnung aus einem Rohr besteht.

5. Kollimationsvorrichtung nach einem der Ansprüche 2 bis 4, **dadurch gekennzeichnet, dass** die Auflagefläche (27) gegenüber dem besagten optischen Punkt (25) liegt.

6. Kollimationsvorrichtung nach einem der Ansprüche 2 bis 4, **dadurch gekennzeichnet, dass** sich die Auflagefläche an der anderen Seite der beweglichen Platte gegenüber dem besagten optischen Punkt befindet.

7. Kollimationsvorrichtung nach einem der Ansprüche 1 bis 6, bei welcher der optische Punkt eine Strahlungsquelle ist, **dadurch gekennzeichnet, dass** Steuerungsmittel vorgesehen sind, um so auf die Gleitvorrichtungen einzuwirken, dass das aus besagter Strahlungsquelle stammende Strahlenbündel umgelenkt werden kann.

8. Kollimationsvorrichtung nach einem der Ansprüche 1 bis 7, **dadurch gekennzeichnet, dass** der Gleitweg beschränkt ist, um einer für die geplante Anwendung akzeptable Aberration zu erzielen.

9. Kollimationsvorrichtung nach einem der Ansprüche 1 bis 8, **dadurch gekennzeichnet, dass** die Gleitvorrichtungen piezoelektrische Keile (105) umfassen.

10. Kollimationsvorrichtung nach einem der Ansprüche 1 bis 8, **dadurch gekennzeichnet, dass** die Gleitvorrichtungen einen elektrischen Motor umfassen, um durch elektrische Steuerung die Senkung der Gleitvorrichtungen zu verändern.

11. Kollimationsvorrichtung nach den Ansprüchen 9 und 10, **dadurch gekennzeichnet, dass** die über den Motor erfolgte Steuerung eine Steuerung zur Verfeinerung der Einstellung ist, wohingegen die Steuerungen für die piezoelektrischen Keile Schnellsteuerungen sind.

12. Kollimationsvorrichtung nach Anspruch 11, **dadurch gekennzeichnet, dass** die Schnellsteuerungen der piezoelektrischen Keile (105) für eine Laserstrahlabtastung benutzt werden.

13. Kollimationsvorrichtung nach einem der Ansprüche 1 bis 10 mit einer senkrecht zur besagten Platte (7) durch besagten Punkt (25) verlaufenden Achse, **dadurch gekennzeichnet, dass** besagte Gleitvorrichtungen so platziert sind, dass sich bei identischer Bewegung jeder dieser Gleitvorrichtungen der optische Mittelpunkt (CO) in einer Richtung parallel zu besagter vorgenannter Achse bewegt und **dadurch gekennzeichnet, dass** eine Bewegung einer der beiden Gleitvorrichtungen besagten optischen Mittelpunkt in Bezug auf dieser Achse längs und quer bewegt.

14. Kollimationsvorrichtung nach Anspruch 1, **dadurch gekennzeichnet, dass** besagte Gleitvorrichtungen so platziert sind, dass der optische Mittelpunkt (CO) durch die Bewegung einer der besagten Gleitvorrichtungen nicht mit dem Drehmittelpunkt der beweglichen Platte zusammenfällt.

15. Kollimationsvorrichtung nach Anspruch 1, **dadurch gekennzeichnet, dass** besagte Gleitvorrichtungen so platziert sind, dass die Betätigung der drei Gleitmittel durch die gleiche Menge zu einer Fokussierung oder Defokussierung besagten Bündels führen.

16. Kollimationsvorrichtung nach Anspruch 1, **dadurch gekennzeichnet, dass** besagte Gleitvorrichtungen so platziert werden, dass die Betätigung einer oder zweier Gleitvorrichtungen zu einer Fokussierung oder Defokussierung und einer Querablenkung besagten Strahlenbündels führt.

17. Kollimationsvorrichtung nach einem der Ansprüche 1 bis 16, **dadurch gekennzeichnet, dass** besagter Punkt eine Lichtstrahlungsquelle ist.

18. Kollimationsvorrichtung nach einem der Ansprüche 1 bis 16, **dadurch gekennzeichnet, dass** besagter Punkt ein Mittel zum Sammeln einer Lichtstrahlung ist.

19. Transformationsvorrichtung für einen optischen Strahl, welche eine erste Kollimationsvorrichtung nach einem der Ansprüche 1 bis 16 in Abhängigkeit von Anspruch 17 und eine zweite Kollimationsvorrichtung nach einem der Ansprüche 1 bis 16 in Abhängigkeit von Anspruch 18 umfasst.

20. Transformationsvorrichtung nach dem vorhergehenden Anspruch, **dadurch gekennzeichnet, dass** der optische Punkt eine aktive optische Komponente wie zum Beispiel ein Modulator ist.

21. Transformationsvorrichtung nach dem vorhergehenden Anspruch, **dadurch gekennzeichnet, dass** der optische Punkt eine passive optische Komponente vom Typ Frequenzverdoppler ist.

**Claims**

1. A collimation device (1) for an optical point (25), in particular such as a light source or radiation detector, with which a radiation beam is associated, said device being made up of:

   - a stationary support plate (7) rigidly connected to said point;
   - an optical plate that is mobile with respect to said support plate for an optical collimation arrangement (20) formed by at least one lens having an optical centre (CO) in order to associate a point of convergence with said beam, the mobile plate being moved by three sliding means (11, 12 and 13) attached to the stationary plate (7) and resting on a bearing plane (27) of said mobile plate, the position of the mobile plate having its distance adjustable with respect to the stationary plate along an optical axis (X) passing by said point and being parallel to said sliding and tilted with respect to said optical axis (X), **characterised in that** said optical centre is separated from said bearing plane (27) so as to be able to obtain considerable transverse movements while maintaining a small angle of rotation of the mobile plate, thus minimising the coma aberrations,

   and **in that** said movement means are manoeuvred with a view to making the point of convergence of said beam coincide with said optical point.

2. The collimation device according to claim 1, **characterised in that** the sliding means are distributed according to the vertices of a right-angled triangle and **in that** an opening (15) is provided at the mobile plate (5) for passing the beam.

3. The collimation device according to claim 1 or 2, **characterised in that** an extension arrangement (50) is provided in order to maintain the collimation arrangement at a distance L from said bearing plane (27) .

4. The collimation device according to claim 3, **characterised in that** the extension arrangement is made up of a tube.

5. The collimation device according to one of the claims 2 to 4, **characterised in that** the bearing face (27) faces said optical point (25).

6. The collimation device according to one of the claims 2 to 4, **characterised in that** the bearing face is placed on the other side of the mobile plate facing said optical point.

7. The collimation device according to one of the claims 1 to 6 for which the optical point is a radiation source, **characterised in that** command means are provided for controlling the sliding means with a view to diverting the beam coming from said radiation source.

8. The collimation device according to one of the claims 1 to 7, **characterised in that** the travel of the slides is limited with a view to obtaining an acceptable aberration for the contemplated use.

9. The collimation device according to one of the claims 1 to 8, **characterised in that** the sliding means comprise piezoelectric shims (105).

10. The collimation device according to one of the claims 1 to 8, **characterised in that** the sliding means comprise an electric motor with a view to varying the insertion of the sliding means by electrical command.

11. The collimation device according to one of the claims 9 and 10, **characterised in that** the command carried out by the motor is a coarse adjustment command while the commands on the piezoelectric shims are quick commands.

12. The collimation device according claim 11, **characterised in that** the quick commands carried out on the piezoelectric shims (105) are used for laser beam scanning.

13. The collimation device according to one of the claims 1 to 10, having an axis defined by a perpendicular to said plate (7) and passing by said point (25), **characterised in that** said sliding means are placed so that an identical movement of each of same moves the optical centre (CO) in a direction parallel to said aforementioned axis and a movement of one or two sliding means moves said optical centre longitudinally and transversely with respect to said axis.

14. The collimation device according to claim 1, **characterised in that** said sliding means are placed so that the optical centre (CO) do not coincide with the centre of rotation of the mobile plate given by the movement of one of said sliding means.

15. The collimation device according to claim 1, **characterised in that** said sliding means are placed so that an action of the three sliding means by the same amount leads to focussing or defocussing of said beam.

16. The collimation device according to claim 1, **characterised in that** said sliding means are placed so that the action of one or two of the sliding means leads to focussing or defocussing and transverse deflection of said beam.

17. The collimation device according to one of the claims 1 to 16, **characterised in that** said point is a point of a light radiation source.

18. The collimation device according to one of the claims 1 to 16, **characterised in that** said point is a light radiation collection point.

19. A device for transforming an optical beam comprising a first collimation device according to one of the claims 1 to 16 in dependence with claim 17 and a second collimation device according to one of the claims 1 to 16 in dependence with claim 18.

20. The transformation device according to the preceding claim, **characterised in that** the optical point is an active optical component such as a modulator.

21. The transformation device according to the preceding claim, **characterised in that** the optical point is a passive optical component such as a frequency doubler.

FIG.1

FIG.2A

FIG.2B

FIG.3

FIG.4

FIG.5

FIG.7

FIG.8

FIG.6

FIG.9

FIG.10

FIG.11

FIG.12

FIG.13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20070171553 A
- US 4498737 A
- US 6304393 B

**Littérature non-brevet citée dans la description**

- **A.ANDALKAR ; S. K. LAMOREAUX ; R.B. WARRINGTON.** Improved external cavity design for cesium D1 (894 nm) diode laser. *REVIEW OF SCIENTIFIC INSTRUMENT,* Novembre 2006, vol. 71 (1